(19) Europäisches Patentamt
European Patent Office
Office européen des brevets

(11) **EP 3 410 363 A1**

(12) **EUROPÄISCHE PATENTANMELDUNG**

(43) Veröffentlichungstag:
**05.12.2018 Patentblatt 2018/49**

(51) Int Cl.:
**G06Q 10/06** *(2012.01)* **G06Q 50/04** *(2012.01)*

(21) Anmeldenummer: **17173626.7**

(22) Anmeldetag: **31.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft 80333 München (DE)**

(72) Erfinder:
• **Fink, Rafael 81829 München (DE)**
• **Seipp, Florian 81375 München (DE)**

(54) **BESTIMMEN EINES PRODUKTIONSPLANS**

(57)    Ein Verfahren zum Bestimmen eines Produktionsplans umfasst Schritte des Erfassens von Produktionsmitteln; des Erfassens, für jedes Produktionsmittel, wenigstens eines Produkts, das mithilfe des Produktionsmittels hergestellt werden kann; des Erfassens, für jedes Produkt, wenigstens eines für seine Produktion erforderlichen Rohstoffs; des Erfassens, welches der Produkte als Rohstoff für welches andere Produkt verwendet wird; des Modellierens der erfassten Umstände als MIP; und des Bestimmens einer Lösung des MIP. Dabei ist die Lösung möglichst optimiert bezüglich wenigstens einer vorbestimmten Kenngröße und gibt an, welches Produkt zu welchem Zeitpunkt auf Basis welches Rohstoffs mithilfe welches Produktionsmittels hergestellt werden soll.

FIG 1

EP 3 410 363 A1

**Beschreibung**

Die vorliegende Erfindung betrifft die Bestimmung eines Produktionsplans. Insbesondere betrifft die Erfindung die Bestimmung eines optimierten Produktionsplans, um auf dessen Basis ein Produktionssystem zu betreiben.

Ein Produktionssystem umfasst mehrere Produktionsmittel, die jeweils dazu eingerichtet sind, auf der Basis wenigstens eines Rohstoffs ein Produkt herzustellen. Das Produkt kann auch als Rohstoff für ein weiteres Produktionsmittel dienen. Um Produkte zu einem vorbestimmten Zeitpunkt bereitstellen zu können, müssen die Produktionsmittel rechtzeitig geeignet betrieben werden, wofür unter Umständen der vorausgehende Betrieb anderer Produktionsmittel erforderlich ist.

Ein Produktionsmittel hat üblicherweise eine begrenzte Produktionskapazität, die beispielsweise bei einer Maschine in Stück pro Stunde ausgedrückt werden kann. Allgemein sollen mehrere unterschiedliche Produkte mittels des Produktionsmittels hergestellt werden, sodass geplant werden muss, welches Produkt in welcher Stückzahl zu welchem Zeitpunkt das Produktionsmittel belegen soll. Die Bestimmung eines Produktionsplans ist schwierig, wenn sich der Bedarf aller Produkte an einem Produktionsmittel der Produktionskapazität nähert oder diese übersteigt.

Zur Bestimmung einer zeitlichen Abfolge des Betriebs aller erforderlichen Betriebsmittel bzw. zur Bedarfsplanung für die externe Beschaffung von Rohstoffen existieren verschiedene Lösungen. Üblicherweise wird eine "Rückwärtsplanung" durchgeführt, die lediglich auf die Bereitstellung einer vorbestimmten Anzahl Produkte zu einem vorbestimmten Zeitpunkt abzielt. Bei dieser Rückwärtsterminierung kann es dann zu Kapazitätskonflikten kommen, die von einer Heuristik häufig nicht oder nicht in guter Qualität aufgelöst werden können.

Eine der vorliegenden Erfindung zu Grunde liegende Aufgabe besteht darin, eine verbesserte Planung für den Betrieb eines Produktionssystems zu ermöglichen. Die Erfindung löst dieses Problem mittels der Gegenstände der unabhängigen Ansprüche. Unteransprüche geben bevorzugte Ausführungsformen wieder.

Ein Verfahren zum Bestimmen eines Produktionsplans umfasst Schritte des Erfassens von Produktionsmitteln; des Erfassens, für jedes Produktionsmittel, wenigstens eines Produkts, das mithilfe des Produktionsmittels hergestellt werden kann; des Erfassens, für jedes Produkt, wenigstens eines für seine Produktion erforderlichen Rohstoffs; des Erfassens, welches der Produkte als Rohstoff für welches andere Produkt verwendet wird; des Modellierens der erfassten Umstände als MIP; und des Bestimmens einer Lösung des MIP. Dabei ist die Lösung möglichst optimiert bezüglich wenigstens einer vorbestimmten Kenngröße und gibt an, welches Produkt zu welchem Zeitpunkt bzw. innerhalb welches einer Vielzahl Zeitschritte auf Basis welches Rohstoffs mithilfe welches Produktionsmittels hergestellt werden soll.

MIP steht für Mixed Integer Programming und beschreibt eine Technik, ein Optimierungsproblem zu lösen. Dabei muss zumindest ein Teil der Eingangsvariablen Ganzzahligkeits-Bedingungen erfüllen und Zusammenhänge zwischen den verwendeten Variablen sind linear. Gibt es keine Ganzzahligkeitsbedingung, so spricht man auch von LP (Linear Programming).

Für MIP wird ein Optimierungsproblem in Form von Variablen, Abhängigkeiten der Variablen, Beschränkungen ("constraints") für die Variablen, und einer oder mehrerer Optimierungsgrößen formuliert. Eine Lösung für das definierte MIP kann mittels eines bekannten Lösungsprogramms ("solver") bestimmt werden, beispielsweise Cplex, Gurobi, SCIP oder XPRESS. Für den Bestimmungslauf des Lösungsprogramms kann angegeben werden, welche Kenngröße zu minimieren oder zu maximieren ist ("objective function") und wie die Qualität einer Lösung als Linearkombination beliebiger Kenngrößen des Optimierungsproblems bestimmt werden soll.

Mittels MIP kann zur Laufzeit üblicherweise schnell eine Lösung bereitgestellt werden, die alle gestellten Bedingungen erfüllt ("feasible solution"). Üblicherweise steigt die Qualität der bereitgestellten Lösung, wenn das Bestimmungsprogramm länger läuft. Zu jeder Lösung kann bestimmt werden, wie weit ihre Qualität von einer theoretisch erreichbaren Qualität einer optimalen Lösung entfernt ist ("gap"). Das Lösungsprogramm kann angehalten werden, wenn die bestimmte Lösung für ausreichend gut befunden wird. Genügend Laufzeit vorausgesetzt findet MIP stets eine optimale Lösung, falls es überhaupt eine Lösung gibt.

Mittels MIP können alle signifikanten Parameter und Zusammenhänge des Produktionssystems modelliert und beim Bestimmen einer Lösung gleichzeitig berücksichtigt werden, sodass eine in mehrerlei Hinsicht optimierte Lösung gefunden werden kann. Es kann ein beliebiger Zustand des Produktionssystems berücksichtigt werden, der sich beispielsweise aus einem vorangehenden Betrieb ergeben haben kann. Das Produktionssystem kann zusammen mit Produkten oder Rohstoffen als Ganzes betrachtet werden, sodass ein verbesserter Produktionsplan bestimmt werden kann.

Beispielsweise können gleichzeitig ein Produktionsvolumen maximiert und Produktionskosten minimiert werden. Dabei können praktisch beliebige Zusammenhänge oder Charakteristika des Produktionssystems formuliert und berücksichtigt werden. Die bestimmte Lösung kann somit beim Betrieb des Produktionssystems verbesserte Resultate liefern. Die praktische Anwendbarkeit der bestimmten Lösung kann gesteigert sein.

Für jedes Produktionsmittel kann eine Produktionskapazität vorbestimmt sein, die angibt, wie viele Produkte mittels des Produktionsmittels innerhalb einer vorbestimmten Zeitscheibe verarbeitet werden können. In anderen Ausführungsformen kann auch eine Produktionskapazität in Stück, Meter, Quadratmeter, Kilogramm oder Liter oder einer anderen Einheit angegeben sein. Üblicherweise müssen sich unterschiedliche Produkte das Produktionsmittel teilen, wobei häufig die Produktionskapazität des Produktionsmittels nicht ausreicht, um alle gewünschten Produkte in ausreichender Menge oder Qualität zu bearbeiten. Die Erstellung der Lösung kann dann besonders aufwändig sein. Für jedes Produkt kann daher eine Produktionskapazitäts-Inanspruchnahme des Produktionsmittels bestimmt werden, die angibt, wie viel der Produktionskapazität des Produktionsmittels durch das Produkt belegt wird. Die Summe der Inanspruchnahmen aller Produkte, die innerhalb der Zeitscheibe auf dem Produktionsmittel bearbeitet werden sollen, darf die vorbestimmte Produktionskapazität nicht übersteigen. Die Lösung kann so bestimmt werden, dass diese Nebenbedingung sicher erfüllt ist.

Produktionskapazitäten der Produktionsmittel sind üblicherweise vorgegeben oder können leicht vorab bestimmt werden. Die Inanspruchnahme der Produktionsmittel durch die verschiedenen Produkte, insbesondere die Summe der Inanspruchnahmen aller Produkte, kann für jedes Produktionsmittel passend bestimmt werden.

Durch das Berücksichtigen der Produktionskapazität kann sicher gestellt werden, dass die bestimmte Lösung realistisch ist und an dem Produktionsmittel umgesetzt werden kann. Eine Aufteilung einer geforderten Kapazität eines Produkts auf mehrere Produktionsmittel oder mehrere Chargen, die nacheinander auf dem Produktionsmittel bearbeitet werden, können unterstützt werden. In einer Ausführungsform wird auch eine Umrüstzeit berücksichtigt, wenn das Produktionsmittel von der Bearbeitung eines ersten Produkts auf die Bearbeitung eines zweiten Produkts umgestellt werden muss, etwa weil ein Werkzeug ausgetauscht oder eine Einstellung verändert werden muss. In dieser Zeit steht das Produktionsmittel üblicherweise nicht für die Produktion zur Verfügung.

Einem Produktionsmittel, einem Produkt- und/oder einem Rohstoff-Bestand kann ein Ort zugeordnet sein. Dabei kann ein Transport eines Rohstoffs oder Produkts von einem Ort zu einem anderen berücksichtigt werden, insbesondere bezüglich der hierfür benötigten Dauer. Das Berücksichtigen kann in Zeit und/oder Beförderungskapazität bemessen werden.

Dadurch kann verbessert dem Umstand Rechnung getragen werden, dass Rohstoffe und/oder Produkte häufig in erheblichem Maß zwischen verschiedenen Produktionsmitteln bewegt werden müssen, um ein übergeordnetes Produkt fertig stellen zu können. Dies gilt insbesondere für ein verteiltes Produktionssystem, bei dem ein Transport über Standortgrenzen, Ländergrenzen oder Kontinentalgrenzen hinaus erfolgen muss. Durch die Berücksichtigung des Orts kann eine Just-in-time-Produktion, wie sie etwa in der Automobilproduktion üblich ist, unterstützt werden.

In einer einfachen Ausführungsform können Transportzeiten und/oder Transportkosten berücksichtigt werden. In einer weiteren Ausführungsform können zusätzlich weitere Charakteristika eines Transportmittels, beispielsweise eines Lastwagens, eines Zugs oder eines Schiffs, berücksichtigt werden. Beförderungscharakteristika können beispielsweise eine Beförderungsdauer oder eine minimale und/oder maximale Menge zu befördernder Gegenstände umfassen. Dadurch kann beispielsweise berücksichtigt werden, dass ein Schiff eine sehr große Menge Gegenstände transportieren kann, zum raschen Laden und Löschen jedoch große Anschlusskapazitäten oder Lagereinrichtungen erforderlich sind.

Zur Aufnahme eines Rohstoffs, Produkts oder Betriebsmittels kann wenigstens eine Lagerstätte vorgesehen sein, wobei der Lagerstätte eine Kapazität zugeordnet sein kann, die nicht überschritten werden darf. Die bestimmte Lösung kann sicherstellen, dass die Kapazität nicht überschritten wird. Gegebenenfalls kann als Optimierungsbedingung angegeben werden, in welcher Weise die Kapazität der Lagerstätte bevorzugt genutzt werden soll, etwa unter Minimierung von Ein- oder Auslagerungen (beispielsweise in einem Kühlhaus), oder unter Anstreben eines vorbestimmten Lagerbestands.

Die Lagerstätte kann einem Produktionsmittel zugeordnet sein und der Lagerstätte kann ein Ort zugeordnet sein. Transporte zur oder von der Lagerstätte können dadurch besser geplant werden. Ein Transport kann eine vorbestimmte Zeit dauern, die berücksichtigt werden kann, um beispielsweise eine vorbestimmte Mindesthaltbarkeit zu gewährleisten oder einen Warteprozess zu unterstützen (z. B. um ein Produkt reifen zu lassen).

Der Produktionsplan kann für einen oder m aufeinander folgende Zeitschritte erstellt werden. Dadurch kann modelliert werden, in welcher Reihenfolge Rohstoffe in Produkte und diese weiter in andere Produkte verarbeitet werden müssen. Insbesondere kann modelliert werden, wie der Betrieb des Produktionssystems, etwa in Abhängigkeit eines gewünschten Ausstoßes an Produkten, hoch- oder heruntergefahren wird. Der Produktionsplan kann praktisch für beliebig viele Zeitschritte m bestimmt werden. Dabei sind die Zeitschritte üblicherweise jeweils gleich groß.

In einer weiteren Ausführungsform wird alle n Zeitschritte ein neuer Produktionsplan erstellt. Dieser kann wieder m folgende Zeitschritte betreffen. Dabei gilt bevorzugt n <= m, sodass eine neue Bestimmung durchgeführt wird, noch bevor der zuvor bestimmte Produktionsplan vollständig abgearbeitet ist. Diese Vorgehensweise kann auch als rollierende Planung bezeichnet werden. Ein bestehender Produktionsplan für zukünftige Zeitschritte kann jeweils durch den aktuellsten Produktionsplan ersetzt werden. Bei jedem Optimierungslauf kann ein gegenwärtiger Zustand, der durch den Betrieb des Produktionssystems nach einem zuvor bestimmten Produktionsplan eingenommen wurde, als Ausgangszustand verwendet werden. Dadurch kann eine verbesserte Regelung erzielt werden.

Durch die zyklisch neu durchgeführt Bestimmung des Produktionsplans können insbesondere Änderungen in den Vorgaben, die sich seit der letzten Bestimmung ergeben haben, berücksichtigt werden. Entsteht beispielsweise zwischenzeitlich ein Transportproblem, ist die Verfügbarkeit eines Rohstoffs nicht wie zuvor geplant gegeben oder soll der Ausstoß an Produkten erhöht oder verringert werden, so kann der jeweils geltende Produktionsplan durch seine zyklische Bestimmung effizient und zeitnah angepasst werden. In einer Ausführungsform wird die Bestimmung eines neuen Produktionsplans in jedem Zeitschritt neu durchgeführt.

Die Zeitschritte sind üblicherweise jeweils gleich groß. Es ist bevorzugt, dass das Verfahren für eine Grobplanung verwendet wird, der eine Feinplanung einzelner bestimmter Produktionsziele nachgeschaltet werden kann. In der Grobplanung haben sich Zeitschritte von Tagen, Wochen, Monaten oder Vielfachen davon bewährt. Längere Zeiträume können ebenfalls von einem Zeitschritt umfasst sein. Je größer die Zeitschritte sind, desto weniger fallen Unsicherheiten bezüglich einzelner Parameter bei der Bestimmung der Lösung ins Gewicht. Allerdings kann die erzielbare Qualität der Lösung auch verringert sein, da die vorgegebenen Restriktionen auch bei Schwankungen von Parametern eingehalten werden müssen. Erfolgt beispielsweise die Lieferung eines erforderlichen Rohstoffs nur unregelmäßig, so kann die Schwankung durch Vergröberung des Zeitrasters verringert werden. Die Schwankungen können auch mittels einer Lagerstätte ausgeglichen werden, sodass unter Umständen mehr Lagerkapazität eingeplant werden muss.

Einem Produkt kann eine maximale Haltbarkeit zugeordnet sein, wobei der Produktionsplan derart erstellt wird, dass das Produkt mit einer vorbestimmten Mindesthaltbarkeit verarbeitet oder bereitgestellt wird. Auch einem Rohstoff kann eine Haltbarkeit zugeordnet sein. Die Beachtung der Haltbarkeit kann beispielsweise bei der Produktion von Lebensmitteln von essentieller Bedeutung sein. Durch die Beachtung der vorbestimmten Mindesthaltbarkeit des fertigen Produkts kann auch die Durchlaufzeit einer Komponente oder eines Stoffs des Produkts durch das Produktionssystem berücksichtigt werden. Ferner kann dafür gesorgt werden, dass bevorzugt solche Produkte oder Rohstoffe weiterverarbeitet oder ausgestoßen werden, deren verbleibende Haltbarkeit am geringsten ist. Ein Verderben eines Rohstoffs oder Produkts kann vermieden werden.

Einem Produkt oder Rohstoff kann eine vorbestimmte Wartezeit zugeordnet sein, wobei der Produktionsplan derart erstellt wird, dass das Produkt oder der Rohstoff nicht vor Ablauf der Wartezeit verarbeitet oder bereitgestellt wird. Dadurch kann beispielsweise ein Reifevorgang, ein Abkühlvorgang, ein Fermentierungsprozess oder ein chemischer Vorgang wie ein Aushärten, Abbinden oder Vernetzen berücksichtigt werden. Glühender Stahl etwa kann nicht transportiert werden, bevor er durch Abkühlen ausreichend fest ist. Entlang einer Produktionskette können unterschiedlich lange Wartezeiten an unterschiedlichen Stellen eingefügt werden.

Zusätzlich kann wenigstens ein Verbrauchsmaterial berücksichtigt werden, das zum Betreiben eines Produktionsmittels erforderlich ist. Beispielsweise kann für den Betrieb eines Produktionsmittels, das einen Ofen umfasst, als Verbrauchsmaterial ein Brennstoff erforderlich sein. Die Beschaffung, die Lagerung und den Transport des Verbrauchsmaterials kann entsprechend dem oben Gesagten ebenfalls berücksichtigt werden. Dazu kann dem Verbrauchsmaterial etwa ein Ort, eine Losgröße, eine Wartezeit oder eine Haltbarkeit zugeordnet sein. Das Verbrauchsmaterial kann auch ein Produkt umfassen, das an einer vorausgehenden Stelle des Produktionsprozesses hergestellt wurde. Allgemein kann das Verbrauchsmaterial in ähnlicher Weise wie ein Rohstoff berücksichtigt werden.

In weiteren Ausführungsformen können eine oder mehrere Nebenbedingungen eingehalten werden, die für die Umsetzbarkeit und praktische Anwendbarkeit sorgen, gleichzeitig aber das Auffinden einer passenden Lösung erschweren können.

Beispielsweise kann die Lösung derart bestimmt werden, dass eine vorbestimmte Mindestproduktionsmenge, die angibt, welche Menge eines Produkts in einem Produktionsschritt wenigstens zu bearbeiten ist, eingehalten ist. Dadurch kann ein übermäßig häufiger Wechsel von zu bearbeitenden Produkten auf einem Produktionsmittel vermieden werden. Ein Produktionsschritt entspricht üblicherweise einer Bearbeitung auf einem Produktionsmittel.

In einem anderen Beispiel kann die Lösung derart bestimmt werden, dass eine vorbestimmte Chargengröße, die eine Menge eines Produkts angibt, von der in einem Produktionsschritt ein ganzzahliges Vielfaches zu bearbeiten ist, eingehalten ist. Logistische Abläufe bei der Produktion können dadurch besser unterstützt werden.

Ein Computerprogrammprodukt umfasst Programmcodemittel zur Durchführung des oben beschriebenen Verfahrens, wenn das Verfahren auf einer Ausführungseinrichtung abläuft oder auf einem computerlesbaren Medium gespeichert ist. Das Verfahren kann insbesondere ganz oder teilweise mittels einer Verarbeitungseinrichtung durchgeführt werden. Die Verarbeitungseinrichtung umfasst bevorzugt einen programmierbaren Mikrocomputer. Vorteile oder Merkmale des Verfahrens können auf eine Vorrichtung, die eine solche Verarbeitungseinrichtung umfasst, übertragen werden und umgekehrt.

Eine Vorrichtung zur Bestimmung eines Produktionsplans umfasst eine Verarbeitungseinrichtung, die zur Durchführung des oben beschriebenen Verfahrens, insbesondere zur Bestimmung einer Lösung eines MIP eingerichtet ist. Dabei ist das MIP auf der Basis von Produktionsmitteln; den Produktionsmitteln jeweils zugeordneten Produkten, die mithilfe der Produktionsmittel hergestellt werden können; den Produkten zugeordneten Rohstoffen, die für die Produktion der Produkte erforderlich sind; und Abhängigkeiten, die beschreiben, welches der Produkte als Rohstoff für welches andere Produkt verwendet wird; definiert. Die Lösung wird als möglichst optimal bezüglich wenigstens einer vorbestimmten Kenngröße bestimmt und gibt an, welches Produkt zu welchem Zeitpunkt auf Basis welches Rohstoffs durch welches Produktionsmittel hergestellt werden soll.

Ein Produktionssystem umfasst mehrere Produktionsmittel, mithilfe derer jeweils aus wenigstens einem Rohstoff oder Produkt jeweils wenigstens ein anderes Produkt hergestellt werden kann; und die oben beschriebene Vorrichtung. Das oben beschriebene Verfahren kann zur Produktionsplanung für das Produktionssystem verwendet werden. In einer Ausführungsform ist das Steuern oder Betreiben zumindest eines Teils des Produktionssystems nach einer Vorgabe des zuvor bestimmten Produktionsplans vom Verfahren umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

Fig. 1    ein beispielhaftes System;

Fig. 2    Einfluss-Größen eines MIP;

Fig. 3    ein Ablaufdiagramm eines Verfahrens zum Bestimmen eines Produktionsplans; und

Fig. 4    beispielhafte Produktionspläne

darstellt.

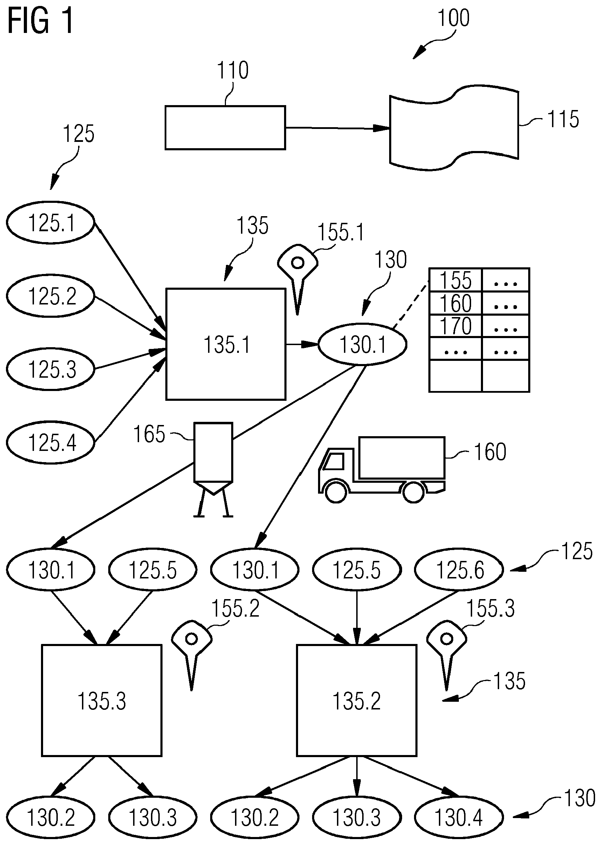

Figur 1 zeigt ein beispielhaftes System 100, das ein Produktionssystem 105 und eine Vorrichtung 110 zur Bestimmung eines Produktionsplans 115 umfasst. Der Produktionsplan 115 soll aufzeigen, wie die Bestandteile des Produktionssystems 105 in Abhängigkeit wenigstens eines Parameters und/oder wenigstens eines Optimierungskriteriums eingesetzt werden sollen. Das Produktionssystem 105 ist zur Herstellung mindestens eines Produkts 135 eingerichtet.

Für die hier folgende Beschreibung wird exemplarisch von einem Produktionssystem 105 zur Herstellung von Brezeln ausgegangen. Nur auf das in Figur 1 gegebene Beispiel bezogene Merkmale tragen ein Bezugszeichen mit einem durch einen Punkt abgetrennten numerischen Suffix (z. B. "123.4"). Merkmale ohne Suffix können jeweils alle Beispiele mit Suffix umfassen.

Allgemein werden im Produktionssystem 105 einer oder mehrere Rohstoffe 125 (hier: Wasser 125.1, Salz 125.2, Hefe 125.3 und Mehl 125.4) in ein Produkt 130 (hier zunächst in einen Brezelrohling 130.1) verarbeitet, wozu ein Produktionsmittel 135 (hier eine Teigverarbeitungsmaschine 135.1, die beispielsweise in einer Großbäckerei aufgestellt sein kann) verwendet wird. Das hergestellte Produkt 130 kann als Rohstoff 125 für einen nachfolgenden Produktionsschritt verwendet werden.

Im dargestellten Beispiel kann der Brezelrohling 130.1 mittels eines ersten Ofens 135.2, der in einer ersten Bäckereifiliale aufgestellt sein kann, in eine fertige Brezel 130.2 fertig gebacken werden. Durch vorherige Zugabe von Mohn 125.5 kann aus dem Brezelrohling 130.1 auch eine Mohnbrezel 130.3 oder durch Zugabe von Käse 125.6 eine Käsebrezel 130.4 hergestellt werden. Die fertigen Brezelvarianten 130.2, 130.3 und 130.4 beider Öfen 135.2, 135.3 werden nicht als Rohstoffe 125 im Produktionssystem 105 weiterverarbeitet, sondern als Endprodukte bereitgestellt.

In einem zweiten Ofen 135.3 kann der zweite Produktionsschritt ebenso durchgeführt werden, für diesen ist aber nur die Produktion von Brezeln 130.2 und, unter Zugabe von Mohn 125.5, Mohnbrezeln 130.3 vorgesehen.

Jedem Rohstoff 125, jedem Produkt 130 und jedem Produktionsmittel 135 kann jeweils ein Ort 155 zugeordnet sein. Die Produktionsmittel 135 sind üblicherweise ortsfest, die anderen Gegenstände können mittels eines Beförderungsmittels 160 zwischen Orten 155 transportiert werden. An beiden Orten 155.2, 155.3 steht jeweils nur ein Ofen 135 zur Verfügung, der zur Fertigstellung der Produkte 130.2 bis 130.4 erforderlich ist. Ist beispielsweise der Ofen 135.3 am ersten Ort 155.2 durch eine Ladung Mohnbrezeln 130.3 belegt, so muss eine Ladung einfacher Brezeln 130.2 warten, bis sie den Ofen 135.3 benutzen kann. Der Ofen 135.2 stellt ein begrenztes Produktionsmittel dar, das nur eine vorbestimmte Produktionskapazität aufweist. Die Gesamtkapazität des Produktionssystems 100 kann durch die Produktionskapazität des Ofens 135 begrenzt sein.

Ähnlich verhält es sich mit der Teigverarbeitungsmaschine 135.1: es können in einer vorbestimmen Zeit nicht mehr Brezelrohlinge 130.1 hergestellt werden, als die Produktionskapazität der Teigverarbeitungsmaschine 135.1 erlaubt.

Der dargestellte Produktionsprozess für Brezeln 130.2 bis 130.4 ist wie die meisten realen Produktionsprozesse mehrstufig. Jede Brezel 130.2 bis 130.4 erfordert in einer ersten Stufe die Produktion eines Brezelrohlings 130.1 in der Teigverarbeitungsmaschine 135.1, und in einer zweiten Stufe das Ausbacken des Brezelrohlings 130.1 in einem Ofen 135.2, 135.3. Die maximale Produktionskapazität einer späteren Stufe kann unter Umständen nicht ausgeschöpft werden, falls in einer früheren Stufe nicht ausreichend Produkte 130 bereitgestellt werden, die in der nachgeordneten Stufe verarbeitet werden sollen.

Die Planung, welches Produktionsmittel 135 zu welchem Zeitpunkt mit der Verarbeitung welcher Mengen welchen Produkts verwendet werden sollen, kann durch solche Abhängigkeiten komplex werden. Außerdem kann die Planung dadurch weiter erschwert werden, dass ein Rohstoff 125 oder Produkt 130 eine vorbestimmte Zeit benötigen kann, um ein Produktionsmittel 135 zu durchlaufen. Die Zeit zwischen den Fertigstellungen zweier Produkte 130 ist üblicherweise verschieden von der Durchlaufzeit eines Rohstoffs durch das Produktionsmittel 135.

Geht beispielsweise an der Teigverarbeitungsmaschine 135.1 das Mehl 125.4 aus, so können für eine bestimmte Zeit noch Brezelrohlinge 130.1 ausgestoßen werden. Wird neues Mehl 125.4 geliefert, kann es eine weitere vorbestimmte Zeit dauern, bevor wieder neue Brezelrohlinge 130.1 produziert werden können. Der Stillstand eines Produktionsmittels 135 kann den Stillstand eines anderen Produktionsmittels 135 bewirken, sodass ein Hochfahren des Produktionssystems 105 aufwändig und komplex sein kann.

Dem Beförderungsmittel 160 können Attribute wie eine Beförderungskapazität oder eine Transportdauer zugeordnet sein. Weitere Attribute können berücksichtigt oder einer Feinplanung überlassen werden. Ein Gegenstand 125, 130 kann in einer Lagerstätte 165 gelagert werden, wobei der Lagerstätte 165 Attribute wie eine Lagerkapazität, eine maximale Lagerdauer, Lagerkosten oder Zugriffszeiten zugeordnet sein können. Jedem Produktionsmittel 135 können außer ihrem Ort 155 auch Attribute wie eine Produktionsdauer pro Produkt 130, ein Ausstoß von Produkten 130 pro Zeiteinheit oder Produktionskosten pro Produkt 130 zugeordnet sein.

Einem Rohstoff 125 oder Produkt 130 können eines oder mehrere Zeitattribute 170 zugeordnet sein. Beispielsweise können ein Produktionszeitpunkt, ein Zeitfenster für die Verwendung eines Betriebsmittels oder eine zugesicherte Mindesthaltbarkeit geführt werden. Bestimmte Rohstoffe 125 oder Produkte 130 müssen zwischen Produktionsschritten reifen; eine einzuhaltende Reifedauer oder ablaufende Haltbarkeit können ebenfalls als Attribute verwendet werden. Darüber hinaus kann es weitere Produktattribute geben, die die produzierbaren Mengen einschränken, z. B. Mindest-Produktionsmengen oder Chargengrößen. In obigem Beispiel könnten zum Beispiel stets 20 Brezelrohlinge 130.1 je Backblech, das im Ofen 135.2 bearbeitet wird, vorgesehen sein, wobei nur teilweise belegte Backbleche nicht erlaubt sind.

Die genannten Elemente und Attribute können als Größen eines MIP ausgedrückt werden. Zusammenhänge zwischen den Elementen und Attributen können durch bevorzugt lineare Gleichungen ausgedrückt werden. Einzuhaltende Bedingungen können beispielsweise als Bool'sche oder numerische Vorgaben modelliert werden. Zusätzlich können Zielvorgaben wie ein gewünschter Ausstoß an Produkten 130, die rechtzeitige Belieferung der Kundennachfragen oder eine gewünschte Auslastung einer Lagerstätte 165 ausgedrückt werden. Randbedingungen wie eine Verfügbarkeit eines bestimmten Rohstoffs 125 an einem bestimmten Ort 155 können als Parameter eingestellt werden.

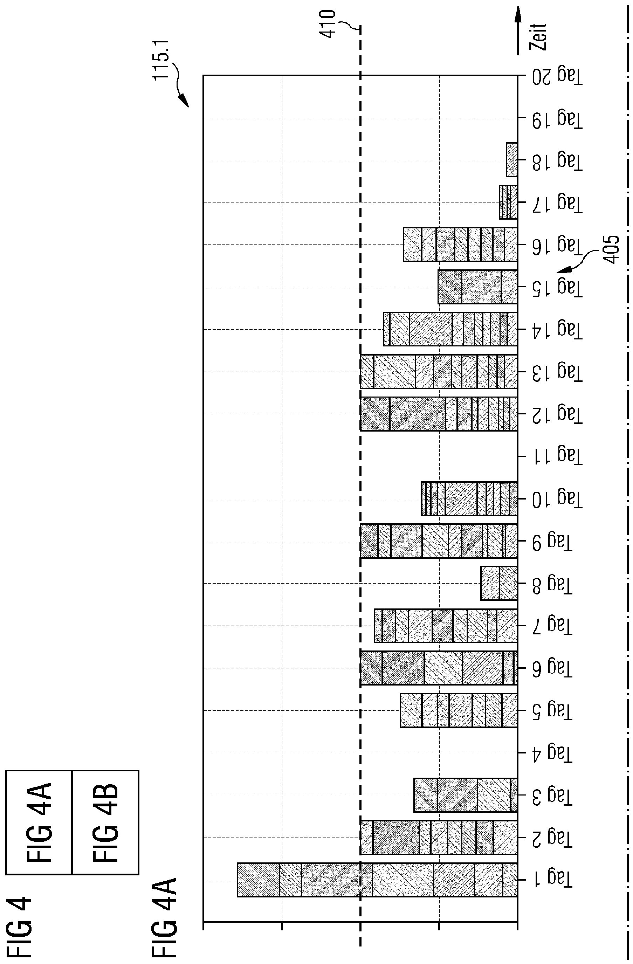

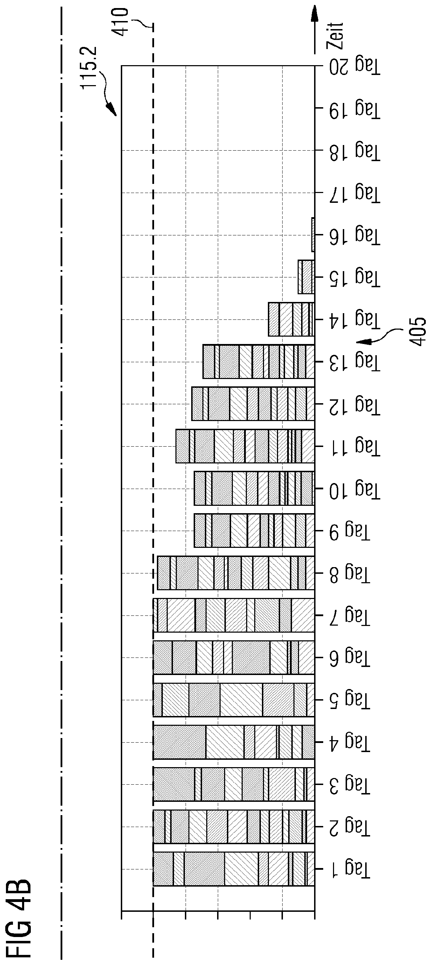

Eine beispielhafte Vorgabe betrifft das minimale Produktionsvolumen eines Produkts 130 auf einem Produktionsmittel 135. Dazu wird mathematisch ausgedrückt, dass für die Produktion eines bestimmten Produkts 130 in einem bestimmten Zeitschritt (vgl. unten mit Bezug auf Fig. 4) auf einem bestimmten Betriebsmittel 135, in allen Zeitschritten 405 die produzierte Menge von Produkten 130 größer als die untere Grenze des Produktionsvolumens für dieses Produkt 130 auf diesem Produktionsmittel 135 sein muss:

$$x(p,r,t) \geq y(p,r,t) \cdot M(p,r) \text{ für alle } p \in P, r \in R, t \in T$$

Dabei bedeuten:

P    Menge der Produkte 130
R    Menge der Produktionsmittel 135
T    Menge der Zeitschritte
M    Parametermatrix
M(p,r)    untere Grenze des Produktionsvolumens für die Produktion des Produkts p auf einem Produktionsmittel rx(p, r,t) Anzahl Produkte p, die auf dem Produktionsmittel r im Zeitschritt t hergestellt werden;

y(p,r,t) 1, falls das Produkt p auf dem Produktionsmittel r im Zeitschritt t hergestellt wird, und andernfalls 0

Entsprechende Definitionen oder Randbedingungen können auch für alle anderen benötigten Variablen oder Zusammenhänge eines MIP angegeben werden.

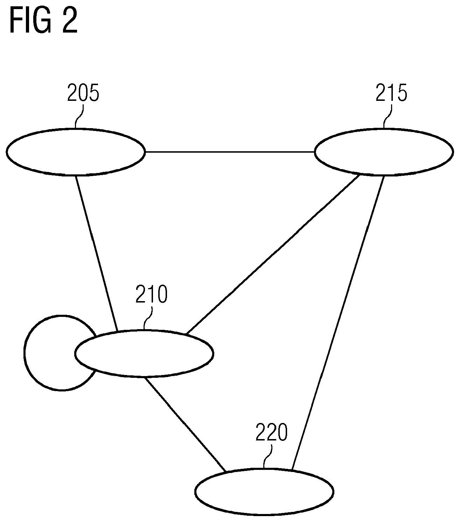

Figur 2 zeigt die unterschiedlichen Typen von Einflussgrößen eines MIP, das ein Produktionssystem 105 modelliert. Konkrete Instanzen der einzelnen Einflussgrößen ergeben dann zusammen die MIP Planungsinstanz. Eine erste Einflussgröße 205 betrifft Produktionsmittel 135, eine zweite Einflussgröße 210 Produkte 130, eine dritte Einflussgröße 215 den in Zeitscheiben unterteilten Planungshorizont und eine vierte Einflussgröße 220 Produkt-Nachfragen. Diese Einflussgrößen werden durch zugehörige Attribute und Parameter genauer spezifiziert:

für die erste Modell-Einflussgröße 205 "Produktionsmittel":

- Kapazitäten (Menge, Volumen, Zeit, Masse)
- Ressourcengruppen Zuordnung
- Kalender, die die Verfügbarkeit/Kapazitäten der Ressourcen spezifizieren

für die zweite Modell-Einflussgröße 210 "Produkte":

- Kapazitätsart (Stück pro Zeit; Umrüstzeit; Gewicht pro Stück)
- Kalender (wann dürfen Produkte produziert und verkauft werden)
- Optionen der Produktionsmittel (Präferenzen, die ausdrücken, dass man die z. B. die Käsebrezel lieber in Backstube 1 als in Backstube 2 fertigt)
- minimale Produktionsmenge
- Chargen- oder Losgröße
- Materialliste der erforderlichen Rohstoffe 125 und Produkte 130, d. h. Erzeugnisstruktur
- Wartezeit und Fertigungsdauer (bei Weiterverarbeitung und Lieferung an den End-Kunden)
- Mindesthaltbarkeit

Lagerbestands-Reichweite (also die Anzahl Zeitscheiben, über die eine Produktion auf Basis von Lagerbeständen aufrecht erhalten kann) z. B. minimal, maximal oder als Zielvorgabe auf einen vorbestimmten Wert in Abhängigkeit von den Bedarfen während der nächsten Zeitscheiben. Zum Beispiel: "Halte stets die kompletten Bedarf an Rohstoffen für die Produktion der nächsten drei Tage vor".

für die dritte Modell-Einflussgröße 215 "Planungshorizont", aufgeteilt in Zeitscheiben:

- Tag (Index) der Zeitscheiben
- Kapazität in Stunden/Anzahl Stunden je Zeitscheibe

für die vierte Modell-Einflussgröße 220 Produkt-Nachfrage:

- gefordertes Produkt 130
- geforderte Menge
- Lieferzeitpunkt
- Aufträge oder vorhergesagte Bedarfe

Dabei können Größen unterschiedlicher Modell-Einflussgrößen 205-220 einander bedingen oder beeinflussen. Beispielsweise können die Mindesthaltbarkeit der zweiten Modell-Einflussgröße 210 und der Lieferzeitpunkt der vierten Modell-Einflussgröße 220 einander bedingen.

Zwischen Variablen unterschiedlicher Modell-Einflussgröße 205-220 können Abhängigkeiten bestehen. Beispielsweise können bei dem beispielhaften Produktionssystem 105 in Figur 1 Chargengrößen für die Öfen 135.2 und 135.3 vorgegeben sein, wobei die Chargengrößen jeweils angeben, wie viele Brezelrohlinge 130.1 in einem Arbeitsgang gebacken werden. Die Chargengröße des ersten Ofens 135.2 kann größer als die des zweiten Ofens 135.3 sein, beispielsweise weil der Ofen 135.2 größer als der Ofen 135.3 ist. Hier bedingt eine Variable der Produktionsmittel-Modell-Einflussgröße 205 (der Ofen) eine Variable der Produkt-Modell-Einflussgröße 210 (die Chargengröße).

Durch die beschriebenen Festlegungen der Parameter und die mit ihnen assoziierten Nebenbedingungen wird für die MIP Instanz ein Suchraum definiert, in welchem eine Lösung gesucht werden kann, die alle Vorgaben, Zusammenhänge und Restriktionen einhält, und dabei eine gewünschte Größe möglichst optimiert. Diese Größe kann beispielsweise die Maximierung der erfüllten Auftragsvolumen, die Minimierung von Produktionskosten oder die Maximierung einer zeitlichen Auslastung eines Produktionsmittels 135 betreffen. Weitere Beispiele für Elemente einer zu optimierenden Größe umfassen

- Rechtzeitige Erfüllung von Aufträgen oder vorhergesagten Aufträgen
- Minimierung einer früher oder später als vorgegeben Nachfragedeckung
- Transportkosten
- Lagerkosten
- Produktionspräferenzen
- Anreize für verbleibende Produktionskapazitäten (Flexibilität).

Die Zahl der Parameter, die variiert werden können, um zu unterschiedlichen Lösungen zu gelangen, ist üblicherweise bereits bei einem einfachen Beispiel sehr groß und die Abhängigkeiten sind komplex. Auf herkömmlichem Weg wird häufig eine Näherungslösung bestimmt, die dann durch Einsatz einer Heuristik manuell verbessert werden soll. Dafür kann erhebliche menschliche Zwischenarbeit erforderlich sein und oft ist nicht bekannt, wie nahe die Qualität der erreichten Lösung an einer erreichbaren Qualität liegt.

Mittels eines Solvers kann ein MIP, welches das Problem repräsentiert, in kürzerer Zeit gelöst und die Lösung optimiert werden. Dazu kann die Qualität der bestimmten Lösung mittels einer vorgegebenen Gleichung bestimmt werden, die eines oder mehrere Zielkriterien, optional gewichtet, berücksichtigen kann. Die relative Qualität der bestimmten Lösung im Vergleich mit einer erreichbaren Qualität ("gap") kann stets bekannt sein.

Durch die Betrachtung des Produktionssystems 105 als ganzzahliges Problem kann das Auffinden einer Lösung auch in einem sehr großen Suchraum effizient mit Hilfe eines Computers durchgeführt werden. Dabei können alle für einen Produktionsvorgang charakteristischen Informationen berücksichtigt werden und die Lösung kann bezüglich beliebiger, auch mehrerer, Vorgaben optimiert werden. Durch das Berücksichtigen von Produktionskapazitäten der Produktionsmittel, zeitlichen Parametern und/oder das Modellieren von Orten, zwischen denen Objekte transportiert werden müssen, kann eine sehr praxisnahe und rasch anwendbare Lösung in Form eines Produktionsplans gefunden werden.

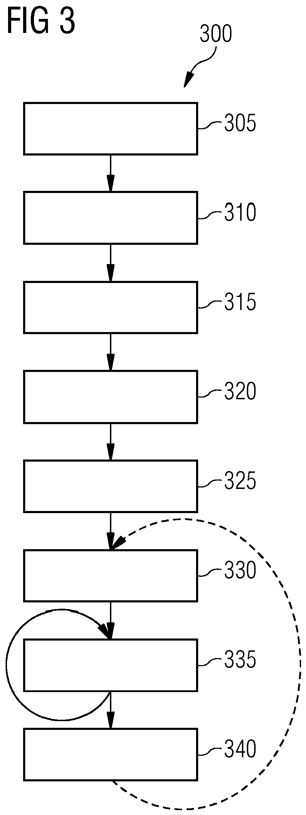

Figur 3 zeigt ein Ablaufdiagramm eines Verfahrens 300 zum Bestimmen eines Produktionsplans 115. Das Verfahren 300 ist zum Ablaufen auf einer Vorrichtung 110 eingerichtet, die insbesondere einen Computer, bevorzugt mit einer Software zur Lösung von MIP, umfassen kann.

In einem Schritt 305 werden Produktionsmittel 135, die eine Verarbeitung oder Produktion von Produkten 130 mittels des Produktionssystems 105 erlauben, und bevorzugt auch die Produktionskapazitäten der Produktionsmittel 135 erfasst. In einem Schritt 310 wird wenigstens ein zu produzierendes Produkt 130 erfasst. In einem Schritt 315 wird für jedes der zu produzierenden Produkte 130 bestimmt, welche Rohstoffe 125 für ihre Herstellung benötigt werden. Entsprechend kann in einem Schritt 320 bestimmt werden, welches der Produkte 130 Zwischenprodukte sind und als Rohstoff 125 für einen nachgeordneten Produktionsschritt verwendet werden sollen.

In einem Schritt 325 wird das Produktionssystem 105 als MIP modelliert. Dazu können beispielsweise Restriktionen, Funktionen oder Zusammenhänge mathematisch ausgedrückt werden, wie sie oben beschrieben sind. Hierfür können insbesondere einige oder alle oben beschriebenen Attribute der Modell-Einflussgrößen 205, 210, 215 und 220 benötigt werden.

In einem Schritt 330 kann das MIP parametriert werden. Dazu können beispielsweise Vorlieben bei der Bestimmung des Produktionsplans 115 angegeben werden.

Wurde das Verfahren 300 bereits zuvor durchgeführt, so können für einen erneuten Durchlauf Parameter, die am Produktionssystem 105 bestimmt wurden, aktualisiert werden. Beispielsweise kann das Verfahren ein erstes Mal ausgeführt und das Produktionssystem 105 auf Basis des dabei erstellten Produktionsplans betrieben werden. Bevor das Verfahren 300 ein zweites Mal ausgeführt wird, kann überprüft werden, ob ein Sollwert, beispielsweise bezüglich eines Lagerbestands eines Produkts 130, der aufgrund des Produktionsplans zu erwarten wäre, auch tatsächlich vorliegt. Der zweite Durchlauf des Verfahrens 300 erfolgt dann verbessert auf Basis des am Produktionssystem 105 bestimmten Ist-Werts.

In einem Schritt 335 wird das MIP gelöst, das heißt, es wird innerhalb des bestehenden Suchraums eine Kombination von Variablenwerten gesucht, die alle Vorgaben und Randbedingungen erfüllt. Die Lösung wird anschließend so weit wie möglich bezüglich einer vorbestimmten Qualitätsfunktion optimiert. Die Optimierung endet üblicherweise, wenn eine als optimal bekannte Lösung gefunden ist, wenn eine Lösung mit einer vorbestimmten Mindestqualität gefunden wurde, wenn der Suchraum erschöpfend durchsucht wurde oder wenn eine vorbestimmte Suchzeit abgelaufen ist.

In einem Schritt 340 wird die bestimmte, optimierte Lösung als Produktionsplan 115 bereitgestellt. Dazu kann aus Variablen der Lösung jeweils eine Angabe abgeleitet werden, in welcher Weise das Produktionssystem 105 zu betreiben ist, also welches Produkt 130 wann und mit welchem Produktionsmittel 135 auf Basis welcher Rohstoffe 125 oder Produkte 130 herzustellen ist.

Es ist bevorzugt, dass der bestimmte Produktionsplan 115 eine vorbestimmte Anzahl m gleich großer Zeitschritte betrifft, wobei für jeden Zeitschritt bestimmt wird, welche Produktions- Lager- oder Transporttätigkeiten durchzuführen sind. Nach einer vorbestimmten Anzahl von n Zeitschritten - wobei $n \leq m$ ist - kann die Bestimmung für m weitere Zeitschritte wiederholt werden. Dieses Prinzip wird auch rollierende Planung genannt.

Figur 4 zeigt beispielhafte Darstellungen von Produktionsplänen 115. In Figur 4A ist ein mit konventionellen Verfahren auf der Basis einer Vorgabe für einen zu erzielenden Ausstoß bestimmter Produktionsplan 115.1, in Figur 4B ein mit der hierin vorgestellten Vorgehensweise bestimmter Produktionsplan 115.2 dargestellt. In vertikaler Richtung ist jeweils eine Laufzeit eines Produktionsmittels 135 und in horizontaler Richtung ein Zeitschritt 405 dargestellt. Jeder Zeitschritt 405 beträgt im dargestellten Beispiel einen Tag; Zeitschritte 405 mit einer anderen, insbesondere größeren Weite sind ebenfalls möglich.

Am Produktionsplan 115.2 ist zu erkennen, dass eine vorbestimmte Produktionskapazität 410 in keinem Zeitschritt 405 überschritten wird, was nach dem konventionellen Produktionsplan 115.1 eine nicht erfüllbare Anweisung darstellen könnte. Außerdem wird das Produktionsmittel 135 in jedem Zeitschritt 405 länger als nach konventioneller Produktionsplanung 115.1 betrieben, sodass die Betriebseffizienz gesteigert und eine Produktionszeit verkürzt sein können.

Der Produktionsplan 115 wird bevorzugt für eine vorbestimmte Anzahl von m Zeitschritten 405 bestimmt. Eine Neubestimmung des Produktionsplans 115 kann periodisch durchgeführt werden, wobei jeweils tatsächliche Parameter (z. B. eine Anzahl tatsächlich in einer Lagerstätte 165 vorhandener Produkte 130 oder tatsächlich eingetroffene Produktionsaufträge) zugrunde gelegt werden können. Die Neubestimmung kann alle n Zeitschritte 405 durchgeführt werden, wobei bevorzugt $n \leq m$ gilt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist zu beachten, dass die Merkmale unterschiedlicher Ausführungsformen der Erfindung miteinander kombiniert werden können, ohne den Gedanken der Erfindung zu übersteigen.

**Patentansprüche**

1. Verfahren (300) zum Bestimmen eines Produktionsplans (115), wobei das Verfahren (300) folgende Schritte umfasst:

   - Erfassen (305) von Produktionsmitteln (135);
   - Erfassen (310), für jedes Produktionsmittel (135), wenigstens eines Produkts (130), das mithilfe des Produktionsmittels (135) hergestellt werden kann;
   - Erfassen (315), für jedes Produkt (130), wenigstens eines für seine Produktion erforderlichen Rohstoffs (125);
   - Erfassen (320), welches der Produkte (130) als Rohstoff (125) für welches andere Produkt (130) verwendet wird;
   - Modellieren (325) der erfassten Umstände als MIP; und
   - Bestimmen (335) einer Lösung des MIP, die möglichst optimal bezüglich wenigstens einer vorbestimmten Kenngröße ist,
   - wobei die Lösung angibt, welches Produkt (130) zu welchem Zeitpunkt (405) auf Basis welches Rohstoffs (125) mithilfe welches Produktionsmittels (135) hergestellt werden soll.

2. Verfahren (300) nach Anspruch 1, wobei für jedes Produktionsmittel (135) unter Berücksichtigung einer verfügbaren Produktionskapazität in jeder Zeitscheibe für jedes Produkt (130) eine Produktionskapazitäts-Inanspruchnahme derart bestimmt wird, dass die Produktionskapazität des Produktionsmittels (135) nicht durch die Summe der Produktionskapazitäts-Inanspruchnahmen der Produkte überschritten wird.

3. Verfahren (300) nach Anspruch 1 oder 2, wobei jedem Produktionsmittel (135), jedem Produktbestand (130) und jedem Rohstoff (125) ein Ort zugeordnet ist und ein Transport eines Rohstoffs (125) oder Produkts (130) von einem Ort zu einem anderen inklusive der hierfür benötigten Dauer berücksichtigt wird.

4. Verfahren (300) nach einem der vorangehenden Ansprüche, wobei wenigstens eine Lagerstätte zur Aufnahme eines Rohstoffs (125) oder Produkts (130) vorgesehen ist und der Lagerstätte eine Kapazität zugeordnet ist, die nicht überschritten werden darf.

5. Verfahren (300) nach Ansprüchen 3 und 4, wobei der Lagerstätte ein Ort zugeordnet ist.

6. Verfahren (300) nach einem der vorangehenden Ansprüche, wobei ein Produktionsplan (115) für m aufeinander folgende Zeitschritte erstellt wird.

7. Verfahren (300) nach Anspruch 6, wobei alle n Zeitschritte ein neuer Produktionsplan (115) erstellt wird.

8. Verfahren (300) nach Anspruch 6 oder 7, wobei jeder Zeitschritt mindestens einen Tag beträgt.

9. Verfahren (300) nach einem der vorangehenden Ansprüche, wobei einem Produkt (130) eine maximale Haltbarkeit zugeordnet ist und der Produktionsplan (115) derart erstellt wird, dass das Produkt (130) mit einer vorbestimmten Mindesthaltbarkeit verarbeitet oder bereitgestellt wird.

10. Verfahren (300) nach einem der vorangehenden Ansprüche, wobei einem Produkt (130) oder Rohstoff (125) eine vorbestimmte Wartezeit zugeordnet ist und der Produktionsplan (115) derart erstellt wird, dass das Produkt (130) oder der Rohstoff (125) nicht vor Ablauf der Wartezeit verarbeitet oder bereitgestellt wird.

11. Verfahren (300) nach einem der vorangehenden Ansprüche, wobei die Lösung derart bestimmt wird, dass eine vorbestimmte Mindestproduktionsmenge, die angibt, welche Menge eines Produkts (130) in einem Produktionsschritt wenigstens zu bearbeiten ist, eingehalten ist.

12. Verfahren (300) nach einem der vorangehenden Ansprüche, wobei die Lösung derart bestimmt wird, dass eine vorbestimmte Chargengröße, die eine Menge eines Produkts (130) angibt, von der in einem Produktionsschritt ein ganzzahliges Vielfaches zu bearbeiten ist, eingehalten ist.

13. Computerprogrammprodukt mit Programmcodemitteln zur Durchführung des Verfahrens (300) nach einem der vorangehenden Ansprüche, wenn es auf einer Ausführungseinrichtung (110) abläuft oder auf einem computerlesbaren Medium gespeichert ist.

14. Vorrichtung (110) zur Bestimmung eines Produktionsplans (115), wobei die Vorrichtung (110) eine Verarbeitungseinrichtung umfasst, die zur Bestimmung einer Lösung eines MIP auf der Basis

- von Produktionsmitteln (135);
- den Produktionsmitteln (135) jeweils zugeordneten Produkten (130), die mithilfe der Produktionsmittel (135) hergestellt werden können;
- den Produkten (130) zugeordneten Rohstoffen (125), die für die Produktion der Produkte (130) erforderlich sind; und
- Abhängigkeiten, die beschreiben, welches der Produkte (130) als Rohstoff (125) für welches andere Produkt (130) verwendet wird;

eingerichtet ist, wobei die Lösung möglichst optimiert bezüglich wenigstens einer vorbestimmten Kenngröße ist, und angibt, welches Produkt (130) zu welchem Zeitpunkt (405) auf Basis welches Rohstoffs (125) durch welches Produktionsmittel (135) hergestellt werden soll.

15. Produktionssystem (105), umfassend

- mehrere Produktionsmittel (135), mithilfe derer jeweils aus wenigstens einem Rohstoff (125) jeweils wenigstens ein Produkt hergestellt werden kann; und
- eine Vorrichtung (110) nach Anspruch 14.

# FIG 1

FIG 2

205

215

210

220

FIG 3

300

305

310

315

320

325

330

335

340

FIG 4

| FIG 4A |
|--------|
| FIG 4B |

FIG 4A

EP 3 410 363 A1

EP 3 410 363 A1

Europäisches Patentamt

European Patent Office

Office européen des brevets

**EUROPÄISCHER RECHERCHENBERICHT**

Nummer der Anmeldung

EP 17 17 3626

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2007 041424 A1 (ABB RESEARCH LTD [CH]) 5. März 2009 (2009-03-05) <br> * Absatz [0008] - Absatz [0020] * <br> * Absatz [0067] - Absatz [0069]; Abbildung 7 * <br> ----- | 1-15 | INV. <br> G06Q10/06 <br> G06Q50/04 |
| X | DE 10 2007 048959 A1 (DAIMLER AG [DE]) 16. April 2009 (2009-04-16) <br> * Absatz [0004] - Absatz [0020]; Abbildungen * <br> ----- | 1-15 | |
| X | US 6 341 266 B1 (BRAUN HEINRICH [DE]) 22. Januar 2002 (2002-01-22) <br> * Spalte 1, Zeile 47 - Spalte 2, Zeile 38 * <br> * Spalte 3, Zeile 64 - Spalte 5, Zeile 9; Abbildungen * <br> ----- | 1-15 | |

RECHERCHIERTE SACHGEBIETE (IPC)

G06Q

Der vorliegende Recherchenbericht wurde für alle Patentansprüche erstellt

| Recherchenort | Abschlußdatum der Recherche | Prüfer |
|---|---|---|
| München | 12. Juli 2017 | Blackley, William |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 17 3626

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2017

| Im Recherchenbericht angeführtes Patentdokument | Datum der Veröffentlichung | Mitglied(er) der Patentfamilie | Datum der Veröffentlichung |
|---|---|---|---|
| DE 102007041424 A1 | 05-03-2009 | BR PI0816060 A2<br>CN 101790746 A<br>DE 102007041424 A1<br>EP 2195779 A1<br>JP 5341090 B2<br>JP 2010537328 A<br>WO 2009030364 A1 | 31-03-2015<br>28-07-2010<br>05-03-2009<br>16-06-2010<br>13-11-2013<br>02-12-2010<br>12-03-2009 |
| DE 102007048959 A1 | 16-04-2009 | DE 102007048959 A1<br>US 2009099815 A1 | 16-04-2009<br>16-04-2009 |
| US 6341266 B1 | 22-01-2002 | AU 764495 B2<br>CA 2332995 A1<br>EP 1088283 A1<br>IL 139850 A<br>JP 2002519265 A<br>US 6341266 B1<br>WO 9967729 A1 | 21-08-2003<br>29-12-1999<br>04-04-2001<br>20-11-2005<br>02-07-2002<br>22-01-2002<br>29-12-1999 |

EPO FORM P0461

Für nähere Einzelheiten zu diesem Anhang : siehe Amtsblatt des Europäischen Patentamts, Nr.12/82